# EUROPEAN PATENT APPLICATION

(11) **EP 3 438 315 A1**
(43) Date of publication of application: **06.02.2019**
(21) Application number: 17775790.3
(22) Date of filing: 28.03.2017
(51) Int. Cl.: C22C 38/00, C22C 38/02, C22C 38/04, C22C 38/06, C22C 38/12, C22C 38/14, C22C 38/60, C21D 8/02, C21D 9/46

(54) **HIGH-STRENGTH COLD ROLLED STEEL SHEET WITH EXCELLENT YIELD STRENGTH AND DUCTILITY, COATED STEEL PLATE, AND METHOD FOR MANUFACTURING SAME**

(30) Priority: 28.03.2016 KR 20160036872
(71) Applicant: Posco, Pohang-si, Gyeongsangbuk-do 37859 (KR)
(72) Inventor: LEE, Kyoo-Young, Gwangyang-si Jeollanam-do 57807 (KR); LEE, Won-Hwi, Gwangyang-si Jeollanam-do 57807 (KR); LEE, Sea-Woong, Gwangyang-si Jeollanam-do 57807 (KR); RYU, Joo-Hyun, Gwangyang-si Jeollanam-do 57807 (KR)
(74) Representative: Zech, Stefan Markus
(86) International application number: PCT/KR2017/003351
(87) International publication number: WO 2017/171366

(57) **Abstract**

The present invention relates to a high-strength steel sheet for use in lightening materials for electronic products and materials for vehicles including automobiles, trains and ships and, more particularly, to a high strength cold rolled steel sheet, a coated steel plate, and a method for manufacturing the same, wherein yield strength and ductility are improved by controlling the internal oxidation depth and the amount of residual austenite after first annealing, and the high strength cold rolled steel sheet and the coated steel plate can be stably manufactured and provided without any dent defects during the manufacturing thereof.

## Description

### [Technical Field]

The present disclosure relates to a high-strength cold rolled steel sheet with excellent yield strength and ductility, a coated steel sheet, and a method of manufacturing the same, which is preferably used as a material for electronic products, and as a material for vehicles, including automobiles, trains and ships.

### [Background Art]

In order to reduce a thickness of a steel sheet to reduce a weight of a material for electronic products, and a material for vehicles, including automobiles, trains and ships, it is necessary to increase the strength of a steel material. Generally, there is a disadvantage, in that ductility may be lowered as strength is increased. In order to overcome this problem, many studies have been conducted into improving the relationship between strength and ductility. As a result, transformed structure steels utilizing a retained austenite phase, together with martensite and bainite, have been developed and applied.

Transformed structure steels may be classified as so-called two phase (DP) steel, transformation induced plasticity (TRIP) steel, and complex phase (CP) steel. Each type of steel may have different mechanical properties, i.e., tensile strength and elongation, depending on a type and fraction of a matrix and a second phase. In particular, when the TRIP steel includes retained austenite, a balance (TS x El) between tensile strength and elongation may have the highest value.

Among such transformed structure steels, CP steel may have elongation lower than other types of steel, and may only be used for simple processing operations, such as roll forming operations. The DP steel and the TRIP steel having high ductility may be applied to cold rolled press forming operations or the like.

Patent Document 1 proposes a method of producing a high-strength steel sheet having excellent formability, using an annealing operation twice. In a first annealing operation, a single phase of austenite is heated, and is cooled to a temperature of an Ms point or higher and a Bs point or lower at an average cooling rate of 20°C/sec or higher; and, in a second annealing operation, 50% or more of tempered bainite is included and about 3% to 30% of retained austenite is secured in the final structure by performing a two phase region annealing operation.

In Patent Document 2, the same process as in Patent Document 1 is carried out, but in the first annealing operation, a single phase of austenite is heated, and is cooled to a temperature of an Ms point or lower at an average cooling rate of 20°C/sec or higher; and, in the second annealing operation, 50% or more of tempered martensite is included and about 3% to 20% of retained austenite is secured in the final structure by performing a two phase region annealing operation.

Patent Documents 1 and 2 may have an advantage of improving stretch flange properties and ductility simultaneously. However, there are disadvantages, in that process costs may be increased by performing an annealing operation twice, and, when steel including a large amount of Si and Mn is subject to a high-temperature annealing operation in the first annealing operation, dents in an annealing furnace may be induced, such that homogeneous materials may not be continuously treated. In addition, when the first annealing operation is performed at a rapid average cooling rate of 20°C/sec or higher after the austenite heat treatment, there is a disadvantage in that the important shape of the material for press forming may be poor.

In addition to the above transformed structure steels, there may be twinning induced plasticity (TWIP) steel in which a large amount of C and Mn are added to the steel to obtain a microstructure of steel as a single phase of austenite.

In the case of the TWIP steel disclosed in Patent Document 3, a balance of tensile strength and elongation (TS x El) may be 50,000 MPa% or more, and may exhibit excellent material properties. However, in order to produce such TWIP steel, when the content of C is 0.4 wt%, the content of Mn may be required to be about 25 wt% or more. When the content of C is 0.6 wt%, the content of Mn may be about 20 wt% or more. However, when not satisfied, an austenite phase causing a twinning phenomenon in the matrix may not be stably secured, and epsilon martensite (ε), having an HCP structure as well as a martensite (α'), having a BCT structure, may be extremely harmful to processability. Therefore, a large amount of elements for stabilizing austenite should be added, such that austenite may be stably present at room temperature. As described above, TWIP steels having a large amount of alloying components added thereto may have problems in that the processes such as casting and rolling may be very difficult due to problems caused by the alloying components, and manufacturing costs may be increased in terms of economy.

Recently, so-called 3^{rd} generation steel or extra advanced high-strength steel (X-AHSS), having higher ductility than that of the DP steel and the TRIP steel, and lower ductility than TWIP steel, has been developed, but there has been no great achievement to date.

For example, Patent Document 4 discloses a quenching and partitioning process (Q&P) for forming retained austenite and martensite as a main structure. As illustrated in a report utilizing the process (Non-Patent Document 1), when the content of carbon is relatively low, such as about 0.2%, the yield strength may be as low as 400 MPa. Further, the elongation obtained from the final product may merely be comparable to that of conventional TRIP steel. In addition, a method of increasing yield strength by increasing amounts of the alloy of carbon and manganese has been derived. However, in this case, there may be a disadvantage, in that weldability may be deteriorated due to the addition of the alloying component in an excessive amount.

In order to solve the problem of the product by the Q&P heat treatment, Patent Document 5 proposes a method of improving final properties by controlling the microstructure before the annealing Q&P heat treatment. However, there has been a problem in that, when steel including a large amount of Si and Mn is subject to the high-temperature annealing operation in the first annealing operation, a dent may be induced in the annealing furnace.
Patent Document 1: Japanese Patent Laid-Open Publication No. 2002-309334
Patent Document 2: Japanese Patent Laid-Open Publication No. 2002-302734
Patent Document 3: Korean Patent Laid-Open Publication No. 1994-0002370
Patent Document 4: US Patent Publication No. 2006-0011274
Patent Document 5: Korean Patent Laid-Open Publication No. 2015-0130612
Non-Patent Document 1: ISIJ International, Vol.51, 2011, p.137-144

### [Disclosure]

### [Technical Problem]

An aspect of the present disclosure is to provide a high-strength cold rolled steel sheet having relatively lower alloy costs, as compared to TWIP steel, in which high yield strength and ductility required for materials for automobile structural members is secured, and which has good shape quality without dents being induced in an annealing furnace during operations; a coated steel sheet; and a method of manufacturing the same.

### [Technical Solution]

According to an aspect of the present disclosure, a high-strength cold rolled steel sheet, excellent in terms of yield strength and ductility, includes: by weight, 0.1% to 0.3% of carbon (C), 0.1% to 2.0% of silicon (Si), 0.005% to 1.5% of aluminum (Al), 1.5% to 3.0% of manganese (Mn), 0.04% or less (excluding 0%) of phosphorus (P), 0.015% or less (excluding 0%) of sulfur (S), 0.02% or less (excluding 0%) of nitrogen (N), 0.01% to 0.1% of antimony (Sb), a remainder of iron (Fe) and unavoidable impurities, and the sum of Si and Al (Si + Al, wt%) satisfies 1% to 3.5%, wherein a microstructure includes, by an area fraction, 5% or less of polygonal ferrite having a ratio of a short axis to a long axis of more than 0.4, 70% or less of acicular ferrite having a ratio of a short axis to a long axis of 0.4 or less, 0.6% to 25% of acicular retained austenite, and a remainder of martensite, an internal oxidation depth is 1 µm or less from a surface.

Another aspect of the present disclosure relates to a high-strength cold rolled steel sheet, excellent in terms of yield strength and ductility, wherein one of a hot-dip galvanized layer, a hot-dip galvannealed layer, an aluminum-silicon plated layer and a zinc-magnesium-aluminum plated layer is formed on a surface of the cold rolled steel sheet.

According to another aspect of the present disclosure, a method of manufacturing a high-strength cold rolled steel sheet, excellent in terms of yield strength and ductility, includes: heating a steel slab satisfying the alloy composition described above to a temperature of 1,000°C to 1,300°C; hot rolling the heated steel slab at a temperature of 800°C to 950°C to produce a hot rolled steel sheet; coiling the hot rolled steel sheet at a temperature of 750°C or lower; cold rolling the coiled hot rolled steel sheet to produce a cold rolled steel sheet; performing a first annealing operation in which the cold rolled steel sheet is annealed at a temperature of Ac3 or higher and cooled at an average cooling rate of 25°C/sec or lower; and performing a second annealing operation in which, after the first annealing operation, the first annealed cold rolled steel sheet is heated and maintained at a temperature of Ac1 to Ac3, cooled in an average cooling rate of lower than 20°C/second to a temperature of 500°C or lower, maintained at the temperature of 500°C or lower 1 second or more, and then cooled.

Another aspect of the present disclosure relates to a method of manufacturing a high-strength cold rolled steel sheet, excellent in terms of yield strength and ductility, further comprising forming one of a hot-dip galvanized layer, a hot-dip galvannealed layer, an aluminum-silicon plated layer and a zinc-magnesium-aluminum plated layer, on a surface of the cold rolled steel sheet after the second annealing operation.

### [Advantageous Effects]

According to an aspect of the present disclosure, a high-strength cold rolled steel sheet, a coated steel sheet, and a method of manufacturing the same may be provided, which is excellent in terms of yield strength and ductility and has a tensile strength of 780 MPa or more, as compared to high ductility transformed structure steel such as the conventional DP steel or TRIP steel, and Q&P steel subjected to Q&P heat treatment; and may be stably produced and provided without dent defects being generated in production.

In addition, the ultra-high-strength steel sheet of the present disclosure may be highly used for weight reduction of a material for electronic products and a material for vehicles including automobiles, trains and ships.

### [Description of Drawings]

FIG. 1 illustrates an example of an annealing operation according to the present disclosure, and illustrates (a) a first annealing operation and (b) a second annealing operation;
FIG. 2 illustrates internal oxidation depth and formation after (a) Inventive Example 2 and (b) Comparative Example 5 after a hot rolling operation; and
FIG. 3 is a graph illustrating yield strength improvement of Comparative Examples 1 to 4 and Inventive Examples 1 and 2 according to amounts of retained austenite after a first annealing operation.

### [Best Mode for Invention]

The present inventors have conducted intensive research into the effects of configuration of a phase obtained by a first annealing operation performed before a second annealing operation in two annealing processes on final physical properties. As a result, the present inventors have found that yield strength and ductility of a final product may be improved by forming appropriately retained austenite in the first annealing operation, in a different manner to a conventional method.

In addition, the present inventors have found that, in order to suppress indent defects in an annealing furnace, mainly occurring in a case of annealing a material to which large amounts of Si, Mn and Al are added, Sb may be added to significantly reduce an internal oxidation depth, and may suppress dent defects caused by surface-enriched layers of Si, Mn and Al due to a high-temperature heat treatment of an austenite single phase annealing operation, corresponding to the first annealing operation, and the present inventors have then accomplished the present disclosure, based on the above.

Hereinafter, a high-strength cold rolled steel sheet excellent in terms of yield strength and ductility, which is one aspect of the present disclosure, will be described in detail.

The high-strength cold rolled steel sheet excellent in terms of yield strength and ductility, which is one aspect of the present disclosure, includes, by weight, 0.1% to 0.3% of carbon (C), 0.1% to 2.0% of silicon (Si), 0.005% to 1.5% of aluminum (Al), 1.5% to 3.0% of manganese (Mn), 0.04% or less (excluding 0%) of phosphorus (P), 0.015% or less (excluding 0%) of sulfur (S), 0.02% or less (excluding 0%) of nitrogen (N), 0.01% to 0.1% of antimony (Sb), a remainder of iron (Fe) and unavoidable impurities, and the sum of Si and Al (Si + Al, wt%) satisfies 1% to 3.5%, wherein a microstructure comprises, by an area fraction, 5% or less of polygonal ferrite having a ratio of a short axis to a long axis of more than 0.4, 70% or less of acicular ferrite having a ratio of a short axis to a long axis of 0.4 or less, 0.6% to 25% of retained austenite, and a remainder of martensite, an internal oxidation depth is 1 µm or less from a surface.

First, the reasons for restricting the composition of the alloying component as described above will be described in detail. Hereinafter, the content of each component is based on weight% unless otherwise specified.

### C: 0.1% to 0.3%

Carbon (C) may be an effective element for strengthening steel, and, in the present disclosure, may be an important element added for stabilizing retained austenite and securing the strength thereof. The content is preferably 0.1% or more to obtain the above-mentioned effect. When the content thereof exceeds 0.3%, the risk of slab defects occurring may increase, and weldability may also be significantly reduced. Therefore, the content of C in the present disclosure is preferably limited to 0.1% to 0.3%.

### Si: 0.1% to 2.0%

Silicon (Si) may be an element which inhibits precipitation of carbides in ferrite and promotes diffusion of carbon in ferrite into austenite, and consequently contributes to the stabilization of retained austenite. It is preferable to add 0.1% or more to obtain the above-mentioned effect. When the content thereof exceeds 2.0%, the hot and cold rolling properties may be significantly deteriorated, and oxides may be formed on a surface of the steel to reduce plating properties. Therefore, in the present disclosure, the content of Si is preferably limited to 0.1% to 2.0%.

### Al: 0.005% to 1.5%

Aluminum (Al) may be an element which is combined with oxygen in the steel to perform a deoxidizing action, and, to this end, the content thereof is preferably maintained at 0.005% or more. Also, Al may contribute to stabilization of retained austenite by suppressing a formation of carbide in ferrite, similar to Si. When the content of Al exceeds 1.5%, it may be difficult to produce a good slab through a reaction with a mold plus during casting, and also, surface oxides may be formed to deteriorate plating properties. Therefore, the content of Al in the present disclosure is preferably limited to 0.005% to 1.5%.

As mentioned above, both Si and Al may contribute to stabilization of retained austenite. To effectively achieve this, it is preferable that the sum of Si and Al (Si + Al, wt%) satisfies 1.0% to 3.5%.

### Mn: 1.5% to 3.0%

Manganese (Mn) may be an element effective for forming and stabilizing retained austenite while controlling transformation of ferrite. When the content of Mn is less than 1.5%, ferrite transformation occurs on a large scale, and it may be difficult to obtain a desired degree of strength. On the other hand, when the content thereof exceeds 3.0%, in a case of a second Q&P heat treatment, there is a problem in which it may be difficult to secure an intended degree of ductility, as phase transformation is overly delayed to form large amounts of martensite. Therefore, the content of Mn in the present disclosure is preferably limited to 1.5% to 3.0%.

### Sb: 0.01 to 0.1%

Antimony (Sb) may have an effect of suppressing internal oxidation after hot rolling by inhibiting surface enrichment of Si, Al, and the like, and movement of oxidizing elements through grain boundary segregation, and for the same reason, may have the effect of improving the quality of a plated surface by inhibiting oxidation by the surface enrichment of Si, Al, and the like. When the content thereof is less than 0.01%, the effect of inhibiting the internal oxidation may be not sufficient, such that the internal oxidation depth of the final product exceeds 1 µm from the surface. Meanwhile, when the content thereof exceeds 0.1%, there may be a problem in which galvannealing of the galvanized layer is delayed.

### P: 0.04% or less (excluding 0%)

Phosphorus (P) may be an element which obtains a solid solution strengthening effect and stabilizes retained austenite. When the content thereof exceeds 0.04%, weldability may be lowered, and the risk of brittleness of the steel may increase. Therefore, in the present disclosure, the content of P may be 0.04% or less, more preferably 0.02% or less.

### S: 0.015% or less (excluding 0%)

Sulfur (S) may be an impurity element inevitably included in the steel, and its content is preferably suppressed to the maximum. In theory, it is advantageous to limit the content of S to 0%, but it may be important to manage the upper limit thereof because it is inevitably included in the manufacturing process. When the content thereof exceeds 0.015%, the ductility and weldability of the steel sheet may be highly impaired. Therefore, in the present disclosure, it is preferable to be limited to 0.015% or less.

### N: 0.02% or less (excluding 0%)

Nitrogen (N) may be an element effective in stabilizing austenite. When the content thereof exceeds 0.02%, the risk of brittleness of steel may be increased, and AlN may be excessively precipitated by reaction with Al, thereby causing a problem of deteriorating quality in a continuous casting process. Therefore, in the present disclosure, it is preferable to limit the N content to 0.02% or less.

At this time, the cold rolled steel sheet of the present disclosure may further include one or more of Ti, Nb, V, Zr and W in addition to the above-mentioned components for the purpose of strength improvement and the like. One or more of Ti: 0.005% to 0.1%, Nb: 0.005% to 0.1%, V: 0.005% to 0.1%, Zr: 0.005% to 0.1%, and W: 0.005% to 0.5%

Titanium (Ti), niobium (Nb), vanadium (V), zirconium (Zr) and tungsten (W) may be effective elements for precipitation strengthening and crystal grain refinement of the steel sheet. When the content thereof is less than 0.005%, respectively, there may be a problem in which it is difficult to secure the above-mentioned effects. On the other hand, when the content thereof exceeds 0.1% in the case of Ti, Nb, V, and Zr, and exceeds 0.5% in the case of W, there may be a problem in which the above-mentioned effects may be saturated, manufacturing costs may be greatly increased, and precipitates may be excessively formed to significantly lower ductility.

The cold rolled steel sheet of the present disclosure may further comprise at least one of Mo, Ni, Cu, and Cr.

One or more of Mo: 1% or less (excluding 0%), Ni: 1% or less (excluding 0%), Cu: 0.5% or less (excluding 0%), and Cr: 1% or less (excluding 0%).

Molybdenum (Mo), nickel (Ni), copper (Cu), and chromium (Cr) may be elements that contribute to stabilization of retained austenite. These elements may act together with C, Si, Mn, Al, and the like, in combination, to contribute to stabilization of austenite. When the content thereof exceeds 1.0% in cases of Mo, Ni, and Cr, and exceeds 0.5% in a case of Cu, there may be a problem in which production cost is excessively increased. Therefore, it is preferable to control these contents to not exceed the above content.

Further, when Cu is added, it may cause brittleness during a hot rolling operation, and therefore it is more preferable that Ni is added simultaneously.

In addition, the cold rolled steel sheet of the present disclosure may further include one or more of Ca, Bi, and B.

Ca: 0.01% or less (excluding 0%), Bi: 0.1% or less (excluding 0%), B: 0.01% or less (excluding 0%)

Calcium (Ca) may be an element which is advantageous for improving processability by controlling a form of sulfide. When the content thereof exceeds 0.01%, the above-mentioned effect may be saturated. Therefore, it is preferable that the content thereof is 0.01% or less.

Bismuth (Bi) may be an element having an effect of improving quality of a plated surface by inhibiting movement of surface oxidation elements such as Si, Al, and the like, through grain boundary segregation. When the content thereof exceeds 0.1%, the above-mentioned effect may be saturated. Therefore, it is preferable that the content thereof is 0.1% or less.

Boron (B) may have an effect of improving quenchability due to the combined effect with Mn, Cr, and the like to suppress soft ferrite transformation at a relatively high temperature. When the content thereof exceeds 0.01%, excessive amounts of B may be concentrated on the steel surface during plating operation to cause to deterioration of plating adhesiveness. Therefore, it is preferable that the content thereof is 0.01% or less.

The remainder of the present disclosure may be iron (Fe). In the conventional steel manufacturing process, since impurities which are not intended from raw materials or surrounding environment may be inevitably incorporated, the impurities may not be excluded. All of these impurities are not specifically mentioned in this specification, as they are known to anyone skilled in the art of steel making.

The cold rolled steel sheet according to the present disclosure satisfying the above-mentioned component composition may include, by an area fraction, 5% or less of polygonal ferrite having a ratio of a short axis to a long axis of more than 0.4, 70% or less of acicular ferrite having a ratio of a short axis to a long axis of 0.4 or less, 0.6% to 25% of retained austenite, and a remainder of martensite, as a microstructure.

Since the polygonal ferrite having a ratio of a short axis to a long axis of more than 0.4 may serve to lower the yield strength of the steel of the present disclosure applied to structural members and the like, the ratio may be limited to 5% or less. The acicular ferrite having a ratio of a short axis to a long axis of 0.4 or less, and the retained austenite may be main structures of the present disclosure, and may be structures advantageous in securing strength and ductility.

The retained austenite may be advantageously needed to ensure a balance between strength and ductility. When a fraction thereof exceeds 25% (upper limit value), there may be a problem in which stabilization of the retained austenite is insufficient, because a carbon may be dispersed and diffused. Therefore, it is preferable that the fraction of the retained austenite in the present disclosure satisfies 25% or less. Meanwhile, the lower limit thereof may basically be 0.6% or more, which is a fraction of the retained austenite which should preferably be secured after the first annealing operation in the present disclosure.

In addition, the steel sheet of the present disclosure preferably has an internal oxidation depth of 1 µm or less from a surface, together with the characteristics of the microstructure.

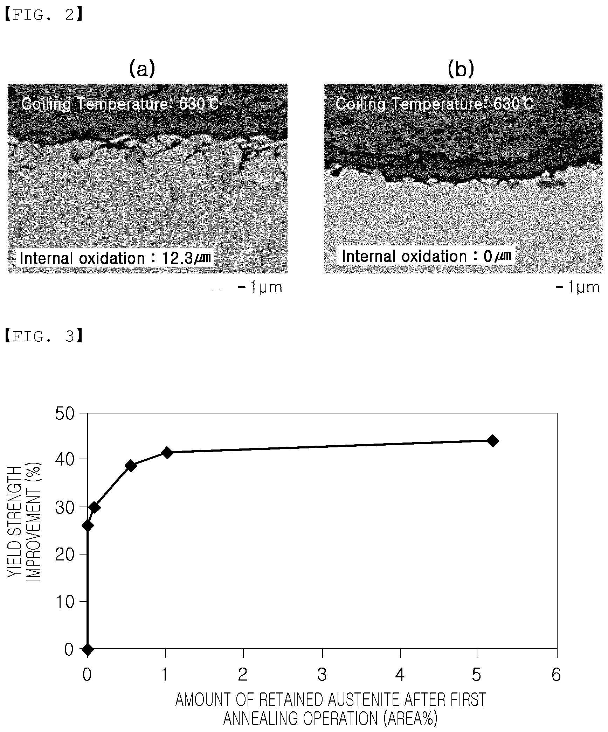

In the present disclosure, Sb may be basically included in an amount of 0.01 to 0.1%. The element may have an effect of suppressing internal oxidation by binding surface-enriched elements such as Mn, Si and Al, and oxygen to be diffused into the steel during cooling and coiling operations after a hot rolling operation through the surface enrichment of Sb (FIG. 2). An internal oxide layer formed after the hot rolling operation may cause cracking of the internal oxide layer through the subsequent pickling and cold rolling operations, which may then cause dent defects in the steel sheet due to detachment and attachment to the inner roll in the annealing furnace during the subsequent annealing operation. These dent defects may deteriorate a surface quality of annealed coils to be subsequently operated, including the product coil, making normal product production difficult. When an internal oxidation depth of the final cold rolled steel sheet exceeds 1 µm, the above problems may arise.

Meanwhile, a lower limit of the internal oxidation depth is not particularly limited, including 0, since it is advantageous to suppress the dent defects, as the internal oxidation does not occur.

The cold rolled steel sheet of the present disclosure satisfying the above-described alloy composition and microstructure may have a tensile strength of 780 MPa or more, and excellent yield strength and ductility, and may suppress dent defects during annealing operation, thereby ensuring excellent productivity.

Meanwhile, the cold rolled steel sheet according to the present disclosure may be manufactured through a manufacturing process described below. In this case, the microstructure after the first annealing operation, that is, the microstructure before the second annealing operation, should include 0.6% or more of the acicular retained austenite. Further, the remainder may be composed of one or more of bainite, martensite and tempered martensite.

This may be to ensure the excellent yield strength and ductility of the cold rolled steel sheet produced in the final annealing operation. When the content of the retained austenite is less than 0.6% after the first annealing operation, there may be a problem in which the yield strength is lowered and the elongation is lowered. Therefore, it is preferable that the retained austenite is 0.6% or more. When 1.5% or more of the retained austenite is secured, excellent physical properties that YS x El (MPa%) of the final annealed product is 16,000 or more may be provided. Therefore, it is more desirable to secure retained austenite of 1.5% or more after the first annealing operation.

One of a hot-dip galvanized layer, a hot-dip galvannealed layer, an aluminum-silicon plated layer and a zinc-magnesium-aluminum plated layer may be formed on a surface of a high-strength coated steel sheet excellent in terms of yield strength and ductility, which is another aspect of the present disclosure.

Hereinafter, a method of manufacturing a high-strength cold rolled steel sheet having excellent yield strength and ductility according to another aspect of the present disclosure will be described in detail.

The method for manufacturing a high-strength cold rolled steel sheet having excellent yield strength and ductility according to another aspect of the present disclosure may be manufactured by subjecting a steel slab satisfying the above alloy composition to heating - hot rolling - coiling - cold rolling - annealing operations, and the conditions of the respective operations will be described in detail below.

### Steel Slab Heating Operation

In the present disclosure, it is preferable to carry out an operation of heating and homogenizing the steel slab before performing hot rolling, and it is more preferably performed in a temperature within a range of 1,000°C to 1,300°C.

When a temperature during the heating operation is lower than 1,000°C, there may be a problem in which the rolling load increases sharply. On the other hand, when the temperature exceeds 1,300°C, energy cost may increase, and amounts of the surface scale may be excessive. Therefore, in the present disclosure, it is preferable to carry out the heating operation of the steel slab at 1,000°C to 1,300°C.

### Hot Rolling Operation

The heated steel slab may be hot rolled into a hot rolled steel sheet, and the hot rolling is preferably performed at a temperature within a range of 800°C to 950°C.

When the hot rolling temperature at the time of hot rolled finishing operation is lower than 800°C, the rolling load may be greatly increased, and the rolling may be difficult to operate. On the other hand, when the hot rolling temperature exceeds 950°C, thermal fatigue of the rolling roll may be greatly increased to cause surface quality deterioration due to surface oxide film formation. Therefore, in the present disclosure, the hot rolling finishing temperature during the hot rolling operation is preferably limited to a temperature within a range of 800°C to 950°C.

### Coiling Operation

The hot rolled steel sheet produced according to the above operations may be coiled, and, at this time, the coiling temperature is preferably 750°C or lower, and more preferably 650°C or lower for suppressing the internal oxide layer.

When the coiling temperature is overly high at the time of performing a coiling operation, scale may be excessively generated on the surface of the hot rolled steel sheet to cause surface defects and deteriorate plating ability. Further, in the steel including a large amount of Mn, Si, Al or the like as in the present disclosure, internal oxidation may be promoted to cause dent defects in the subsequent annealing operation. Therefore, the coiling operation is preferably performed at 750°C or lower, more preferably, 650°C or lower. At this time, a lower limit of the coiling temperature is not particularly limited, but it is more preferably carried out at Ms ∼ 750°C in consideration of the difficulty of subsequent cold rolling operation as the strength of the hot rolled steel sheet in the formation of martensite may be overly high.

Production outside of the above hot rolling conditions may not greatly change the physical properties of the final product, but may affect the productivity thereof.

### Cold Rolling Operation

The hot rolled steel sheet may be pickled to remove the oxide layer, and then cold rolled to obtain a cold rolled steel sheet for matching the shape and thickness of the steel sheet. In general, when the general annealing operation is carried out, it is common to set a lower limit of a cold rolling reduction rate to prevent the formation of coarse crystal grains during recrystallization. In a case of the first annealing operation before the final annealing operation as in the present disclosure, there may be no restriction on the reduction rate in the cold rolling operation.

### Annealing Operation (First Annealing Operation and Second Annealing Operation)

The present disclosure is directed to manufacturing a cold rolled steel sheet comprising, by an area fraction, 5% or less of polygonal ferrite having a ratio of a short axis to a long axis of more than 0.4, 70% or less of acicular ferrite having a ratio of a short axis to a long axis of 0.4 or less, 0.6% to 25% of retained austenite, and a remainder of martensite, wherein an internal oxidation depth is 1 µm or less from a surface. The subsequent annealing operation may be important to be controlled to obtain such a cold rolled steel sheet.

Particularly, in the present disclosure, to secure a desired microstructure through redistribution of elements such as carbon and manganese during an annealing operation, a conventional annealing process including Austempering or Q&P heat treatment after a cold rolling operation may be not carried out, to produce a final product. As will be described later, the present disclosure is characterized in that, after the first annealing operation, a low-temperature structure including 0.6% or more of acicular retained austenite may be secured, subsequently, in the second annealing operation, the steel sheet may be heated and maintained at a temperature in the range of Ac1 to Ac3, and then cooled at an average cooling rate of less than 20°C per second at a temperature of 500°C or lower, maintained for 1 second or longer, and then cooled.

The more the amount of retained austenite secured after the first annealing operation, the higher the yield strength and ductility. When the retained austenite of 1.5% or more after the first annealing operation is secured, the YS x El (MPa%) of the final annealed product may be 16,000 or more, exhibiting very good physical properties. Therefore, it is more preferable to secure retained austenite of 1.5% or more after the first annealing operation.

### First Annealing Operation

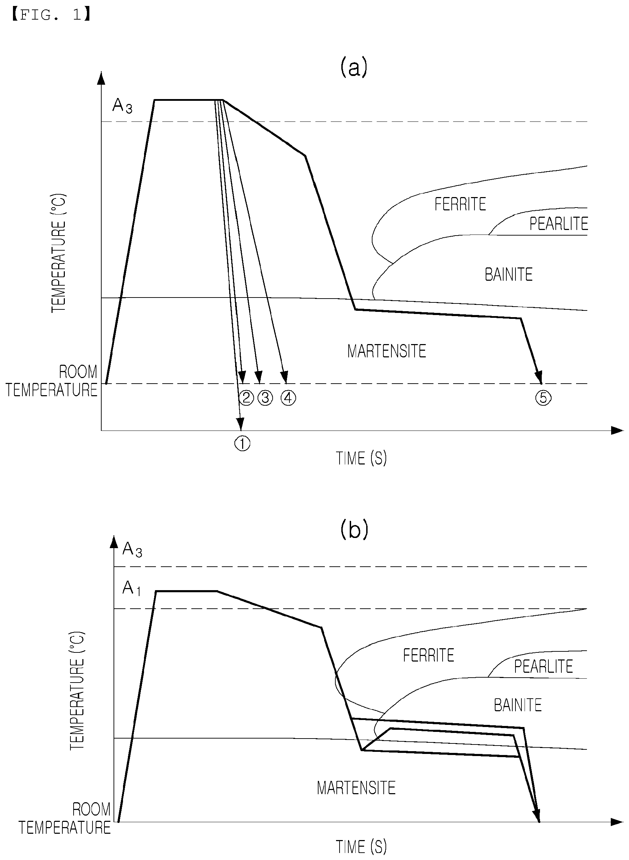

First, it is preferable that the cold rolled steel sheet as above is subjected to a first annealing operation in which annealing operation is performed at a temperature equal to or higher than Ac3, and a cooling operation is performed at an average cooling rate equal to or lower than 25°C/sec (see (a) of FIG. 1).

The cooling rate may be limited to secure retained austenite at 0.6% or more. When cooled to 25°C/sec or lower, it may be possible to more stably secure the retained austenite by dynamic partitioning, and secure 0.6% or more of retained austenite. Dynamic partitioning means that alloying elements are redistributed between phases during cooling at high temperatures.

In (a) of FIG. 1, No. 5 of the heat treatment indicates a normal austempering heat treatment, which indicates a condition in which an average cooling rate is very slow.

The microstructure of the first annealed cold rolled steel sheet should include 0.6% or more of retained austenite, and the formation of soft polygonal ferrite is preferably suppressed to a minimum because it inhibits obtaining a finely finished annealed structure during the subsequent annealing heat treatment, and the remainder may be secured in any one of bainite, martensite, and tempered martensite, which are low-temperature microstructures.

In the present disclosure, it may be important that the ferrite region illustrated in (a) of FIG. 1 barely penetrates during cooling operation to secure the polygonal ferrite to 5% or less after the final annealing operation.

Therefore, when any one of the austempering heat treatment and the Q&P heat treatment is performed in a 1-step heat treatment or a 2-step heat treatment, as illustrated No. 5 in (a) of FIG. 1, the initial cooling rate may be controlled to be slow, and the average cooling rate may be controlled to be 25°C/sec or lower, such that the ferrite region may be not passed and the retained austenite may be secured simultaneously.

The above-mentioned heat treatment conditions are to ensure excellent yield strength and ductility of the cold rolled steel sheet manufactured through the austempering or Q&P process in the final annealing operation. When after the first annealing operation. When the acicular retained austenite after the first annealing operation is included in less than 0.6%, there may be a disadvantage in that the yield strength is lowered and the elongation is lowered.

### Second Annealing Operation

After the first annealing operation, the steel sheet may be heated and maintained at a temperature in the range of Ac1 to Ac3, and then cooled to an average cooling rate of lower than 20°C/sec to a temperature of 500°C or lower. After cooling to a temperature of 500°C or lower, general austempering or Q&P heat treatment may be performed ((b) of FIG. 1).

In the present disclosure, the heating operation in the range of Ac1 to Ac3 may be intended to secure the stability of austenite through distribution of alloying elements into the austenite during annealing operation, and ensure retained austenite in the final structure at room temperature. It may be easy to secure the acicular structure by the acicular retained austenite formed after the first annealing operation.

It may be easy to secure a fine structure even after the second annealing operation in which an inverse transformation is carried out by the presence of such an acicular retained austenite.

The cooling temperature after the two phase region annealing operation is preferably 500°C or lower. This may be because the austenite phase is transformed into pearlite, when maintained at a temperature higher than 500°C for a long time, and the retained austenite is not ensured smoothly. Therefore, it is preferable to heat the steel sheet to a temperature of 500°C or lower for long-term maintenance, and inevitably increase the temperature to 500°C or more at the time of the galvannealing heat-treatment for fusion alloying. The galvannealing heat treatment within 1 minute does not significantly deteriorate the physical properties of the steel of the present disclosure.

At this time, a slow cooling section immediately after the annealing operation may be passed to suppress meandering of the steel sheet during the cooling operation after the annealing operation, but the transformation into the polygonal ferrite in the slow cooling section should be suppressed as much as possible, to secure the microstructure and physical properties of the steel of the present disclosure.

As described above, in the present disclosure, a low-temperature structure including 0.6% or more of acicular retained austenite may be heated and maintained in a range of Ac1 to Ac3 to secure the acicular microstructure at the time of performing the second annealing operation. Therefore, high yield strength and ductility may be secured, in comparison with physical properties obtained by the general annealing operations twice, which does not secure the retained austenite in the conventional Austempering, the Q&P process and the first annealing operation.

Meanwhile, a method of manufacturing a high-strength cold rolled steel sheet, excellent in terms of yield strength and ductility, which is another aspect of the present disclosure, further comprises an operation of forming a plated layer on the surface of the cold rolled steel sheet after the second annealing operation.

In the operation of forming the plated layer, a hot-dip galvanized layer may be formed by a dip operation in a hot-dip galvanizing bath, or a galvannealed hot-dip galvanized layer may be formed by alloying of the formed hot-dip galvanized layer. Further, the aluminum-silicon plated layer or the zinc-magnesium-aluminum plated layer may be formed by immersion in an aluminum-silicon or zinc-magnesium-aluminum melting port.

### [Mode for Invention]

Hereinafter, the present disclosure will be described more specifically by way of examples. It should be noted, however, that the following examples are intended to illustrate the present disclosure in more detail, and not to limit the scope of the present disclosure. The scope of the present disclosure to be protected may be determined by the matters described in the claims and matters able to be reasonably deduced therefrom.

An ingot having a thickness of 90 mm and a width of 175 mm having a composition illustrated in Table 1 below was prepared through vacuum melting, homogenized by heating at 1,200°C for 1 hour, subjected to hot rolling at 900°C or higher, cooled to 630°C or higher, charged into a furnace already heated at 630°C and maintained for 1 hour, and hot rolling operation was simulated by performing a furnace cooling operation. Thereafter, the hot rolled sheet material was cold rolled at a cold reduction rate of 50% to 60%, and then subjected to annealing heat treatment under the conditions provided in Table 2 below to prepare a final cold rolled steel sheet. Strength and elongation were measured, and the results are illustrated in Table 2 below.

In the following Table 1, the unit of each of element content is % by weight.

In Table 1, the unit in Bs (bainite transformation start temperature), Ms (martensitic transformation start temperature), Ac1 (austenite appearance temperature at the time of increasing temperature), Ac3 (temperature at which the ferrite is completely disappeared and the austenite single phase heat treatment starts, at the time of increasing temperature) is °C, and may be calculated by the following relationship. In the following relationship, the symbol of each element represents the content of each element in weight%.
Bs=830-270C-90Mn-37Ni-70Cr-83Mo
Ms=539-423C-30.4Mn-12.1Cr-17.7Ni-7.5Mo
Ac1=723-10.7Mn-16.9Ni+29.1Si+16.9Cr+290As+6.38W

Ac3=910-203√C-15.2Ni+44.7Si+104V+31.5Mo+13.1W-30Mn-11Cr-20Cu+700P+400Al+120As+400Ti

**[Table 1]**

| Steel | C | Mn | Si | P | S | Al | Ti | Nb | Sb | N | Bs | Ms | Ac1 | Ac3 |
|---|---|---|---|---|---|---|---|---|---|---|---|---|---|---|
| *IS 1 | 0.22 | 2.17 | 1.47 | 0.006 | 0.002 | 0.03 | - | - | 0.021 | 0.005 | 575 | 380 | 743 | 832 |
| IS 2 | 0.15 | 2.2 | 1.49 | 0.012 | 0.004 | 0.03 | - | - | 0.018 | 0.003 | 592 | 409 | 743 | 852 |
| IS 3 | 0.18 | 2.56 | 1.44 | 0.011 | 0.004 | 0 .42 | 0.02 | 0.023 | 0.051 | 0.004 | 551 | 385 | 738 | 995 |
| **CS 1 | 0.22 | 2.21 | 1.51 | 0.01 | 0.004 | 0.03 | - | - | - | 0.004 | 572 | 379 | 743 | 835 |
| CS 2 | 0.08 | 1.74 | 1.42 | 0.011 | 0.004 | 0.03 | - | - | 0.019 | 0.003 | 652 | 452 | 746 | 884 |
| CS 3 | 0.27 | 4.83 | 1.57 | 0.012 | 0.003 | 0.03 | - | - | 0.02 | 0.003 | 322 | 278 | 717 | 750 |

| | | | | | | | | | | | | | | |
|---|---|---|---|---|---|---|---|---|---|---|---|---|---|---|
| *IS: Inventive Steel, **CS: Comparative Steel, | | | | | | | | | | | | | | |

**[Table 2]**

| Steel | Exampl e | Microstructu re, after 1^{st} annealing | Internal Oxidation Depth (*µ*m) | 2^{nd} annealing Tem.(°C) | Ms or less Cooling Tem. (°C) | Reheatin g Tem.(°C) | Over-aging Tem. (□) | Yield Strength (MPa) | Tensile Strength (MPa) | Elonga tion (%) |
|---|---|---|---|---|---|---|---|---|---|---|
| *IS 1 | ****CE 1 | Cold rolled structure+Re tained γ 0% | 0 | 810 | None | None | 420 | 412 | 1012 | 23 |
| | CE 2 | Martensite+Retained γ 0% | 0 | 810 | None | None | 420 | 521 | 1033 | 25 |
| | CE 3 | Martensite +Retained γ 0.08% | 0 | 810 | None | None | 420 | 537 | 1017 | 25 |
| | CE 4 | Martensite +Retained γ 0.54% | 0 | 810 | None | None | 420 | 572 | 999 | 27 |
| | ***IE 1 | Martensite +Retained γ 1.02% | 0 | 810 | None | None | 420 | 584 | 1010 | 27 |
| | IE 2 | Bainite +Martensite +Retained γ 5.17% | 0 | 810 | None | None | 420 | 594 | 981 | 29 |
| IS 2 | IE 3 | Martensite +Retained γ 0.6% | 0 | 810 | 250 | 440 | None | 580 | 842 | 27 |
| IS 3 | IE 4 | Martensite +Retained γ 1.3% | 0 | 810 | 250 | 440 | None | 598 | 1150 | 18 |
| **CS 1 | CE 5 | Bainite +Martensite +Retained γ 4.51% | 12.3 | 810 | None | None | 420 | 588 | 983 | 28 |
| CS 2 | CE 6 | Martensite +Retained γ 0.6% | 0 | 810 | 350 | 440 | None | 455 | 640 | 33 |
| CS 3 | CE 7 | Martensite +Retained γ 0.64% | 0 | 730 | 150 | 440 | None | 1050 | 1215 | 13 |

| | | | | | | | | | | |
|---|---|---|---|---|---|---|---|---|---|---|
| *IS: Inventive Steel, **CS: Comparative Steel, ***IE: Inventive Example, ****CE: Comparative Example | | | | | | | | | | |

In Table 2, an example of Comparative Example 1, in which the microstructure after a first annealing operation is a cold rolled structure, was subjected to a final annealing operation (a second annealing operation) without performing the first annealing operation after a cold rolling operation. In other examples, microstructure was obtained by performing the first annealing operation and cooling operation in a single phase of austenite. In Table 2, Ms or less cooling temperatures expressed in the side column of the final annealing temperature represent cooling temperatures in ranges of Ms to Mf at the time of Q&P heat treatment, and reheating temperatures represent heat treatment temperatures increased for second redistribution. Examples in which the two temperatures are expressed as "None" are examples in which over-aging treatments of the general annealing operation, instead of Q&P, were applied, and illustrate the heat treatment temperature in the heat indicated by the over-aging temperature. The examples in which Q&P heat treatment was performed are illustrated as being distinguished from each other by denoting "None" in columns of over-aging temperature.

Effects of the amount of retained austenite secured after the first annealing operation on the physical properties after the final annealing operation were examined under different cooling conditions.

Comparative Example 2 (① in (a) of FIG. 1) was cooled to room temperature through a water cooling operation (average cooling rate: 1000°C/sec or higher), and further cooled with liquid nitrogen.

Comparative Example 3 (② in (a) of FIG. 1) was cooled to room temperature through a water cooling operation (average cooling rate: 1000°C/sec or higher).

Comparative Example 4 (③ in (a) of FIG. 1) was cooled through a Mist cooling operation (average cooling rate 180°C/sec) .

Inventive Example 1 (④ in (a) of FIG. 1) was cooled to room temperature at a cooling rate of 25°C/sec.

Inventive Example 2 (⑤ in (a) of FIG. 1) was cooled by an austempering operation as in No. 5 in (a) of FIG. 1.

Inventive Examples 3 and 4 and Comparative Examples 6 and 7 were cooled to room temperature at a cooling rate of 25°C/sec. In Comparative Example 5, the same austempering as in No. 5 in (a) of FIG. 1.

To confirm yield strength improvement of Comparative Example 1 in which no annealing operation was performed twice for Inventive Steel 1, and Comparative Examples 2 to 4 and Inventive Examples 1 and 2 in which cooling conditions after the first annealing operation varied, and multiplication of yield strength and elongation, multiplication of tensile strength and elongation, ratio of yield strength to tensile strength, and yield strength improvement based on Comparative Example 1 were measured and described. FIG. 3 is a graph illustrating yield strength improvement after the second annealing operation according to amounts of acicular retained austenite after the first annealing operation.

**[Table 3]**

| Example | YS x El (MPa%) | TS x El (MPa%) | YS improvement (%) | YS/TS (%) |
|---|---|---|---|---|
| **CE 1 | 9476 | 23276 | - | 41 |
| CE 2 | 13030 | 25833 | 26.5 | 50 |
| CE 3 | 13425 | 25425 | 30.3 | 53 |
| CE 4 | 15444 | 26973 | 38.8 | 57 |
| *IE 1 | 15768 | 27270 | 41.7 | 58 |
| IE 2 | 17226 | 28449 | 44.2 | 61 |

| | | | | |
|---|---|---|---|---|
| *IE: Inventive Example, **CE: Comparative Example | | | | |

In Comparative Examples 2 to 4 and Inventive Examples 1 and 2 in which an annealing operation was applied twice, the yield strength was improved and the multiplication of yield strength and elongation were both improved, compared with Comparative Example 1 in which a conventional cold hot rolled-annealing treatment was applied. In particular, it may be seen that the higher the fraction of retained austenite, the better the yield strength and the better the multiplication of yield strength and elongation.

It can be seen from Table 3 and FIG. 3 that inventive examples 1 and 2, in which the fraction of the acicular retained austenite is 0.6% or more, provide an improvement of 40% or more, as compared to a case in which the acicular retained austenite is less than 0.6%. Particularly, in the case of Inventive Example 2, in which the amount of acicular retained austenite was very high, excellent improvements such as YS x El, TS x El, and the like, were achieved.

Invention Example 3 using Inventive Steel 2 had carbon contents lower than Inventive Steel 1 and a relatively lower tensile strength, but still exhibited a relatively higher yield ratio.

Invention Example 4 using Inventive Steel 3 had a relatively lower yield ratio due to the introduction of ferrite by addition of a large amount of Al, but had an excellent properties, such as TS x El of 20,000 MPa% or more by securing 1.3% of the acicular retained austenite before the second annealing operation.

In Comparative Example 6 using Comparative Steel 2, it was difficult to obtain a tensile strength standard which was limited in the present disclosure, because the amount of carbon added was very low. In Comparative Example 7 using Comparative Steel 3, the strength was excellent due to addition of a large amount of Mn, but a decrease in elongation is great, and TS x El was less than 20,000 MPa%.

Comparative steel 1 has similar components as those of Invention Steel 1, except that no Sb is added. In Comparative Example 5 using comparative steel 1, there was almost no difference in physical properties from Inventive Example 2 using Inventive Steel 1, but as illustrated in FIG. 2, the internal oxidation depth after hot rolling operation was 12.3 µm, and surface cracks and dents may occur in the subsequent operations, such as pickling operation, cold rolling operation, and annealing operation.

While exemplary embodiments have been illustrated and described above, it will be apparent to those skilled in the art that modifications and variations could be made without departing from the scope of the present disclosure as defined by the appended claims.

## Claims

1. A high-strength cold rolled steel sheet, excellent in terms of yield strength and ductility, comprising, by weight, 0.1% to 0.3% of carbon (C), 0.1% to 2.0% of silicon (Si), 0.005% to 1.5% of aluminum (Al), 1.5% to 3.0% of manganese (Mn), 0.04% or less (excluding 0%) of phosphorus (P), 0.015% or less (excluding 0%) of sulfur (S), 0.02% or less (excluding 0%) of nitrogen (N), 0.01% to 0.1% of antimony (Sb), a remainder of iron (Fe) and unavoidable impurities, and the sum of Si and Al (Si + Al, wt%) satisfies 1% to 3.5%,
wherein a microstructure comprises, by an area fraction, 5% or less of polygonal ferrite having a ratio of a short axis to a long axis of more than 0.4, 70% or less of acicular ferrite having a ratio of a short axis to a long axis of 0.4 or less, 0.6% to 25% of retained austenite, and a remainder of martensite,
an internal oxidation depth is 1 µm or less from a surface.

2. The high-strength cold rolled steel sheet according to claim 1, wherein, in the cold rolled steel sheet, the microstructure before the second annealing operation comprises 0.6% or more of acicular retained austenite, and the remainder is composed of one or more of bainite, martensite and tempered martensite.

3. The high-strength cold rolled steel sheet according to claim 1, wherein the cold rolled steel sheet further comprises one or more selected from the group consisting of 0.005% to 0.1% of titanium (Ti), 0.005% to 0.1% of niobium (Nb), 0.005% to 0.1% of vanadium (V), 0.005% to 0.1% of zirconium (Zr), and 0.005% to 0.5% of tungsten (W).

4. The high-strength cold rolled steel sheet according to claim 1, wherein the cold rolled steel sheet further comprises one or more selected from the group consisting of 1% or less (excluding 0%) of molybdenum (Mo), 1% or less (excluding 0%) of nickel (Ni), 0.5% or less (excluding 0%) of copper (Cu), and 1% or less (excluding 0%) of chromium (Cr) .

5. The high-strength cold rolled steel sheet according to claim 1, wherein the cold rolled steel sheet further comprises one or more selected from the group consisting of 0.01% or less (excluding 0%) of calcium (Ca), 0.1% or less (excluding 0%) of bismuth (Bi), and 0.01% or less (excluding 0%) of boron (B).

6. The high-strength cold rolled steel sheet according to claim 1, wherein tensile strength of the cold rolled steel sheet is 780 MPa or greater.

7. The high-strength cold rolled steel sheet according to any one of claims 1 to 6, wherein one of a hot-dip galvanized layer, a hot-dip galvannealed layer, an aluminum-silicon plated layer and a zinc-magnesium-aluminum plated layer is formed on a surface of the cold rolled steel sheet.

8. A method of manufacturing a high-strength cold rolled steel sheet, excellent in terms of yield strength and ductility, comprising:
heating a steel slab comprising, by weight, 0.1% to 0.3% of carbon (C), 0.1% to 2.0% of silicon (Si), 0.005% to 1.5% of aluminum (Al), 1.5% to 3.0% of manganese (Mn), 0.04% or less (excluding 0%) of phosphorus (P), 0.015% or less (excluding 0%) of sulfur (S), 0.02% or less (excluding 0%) of nitrogen (N), 0.01% to 0.1% of antimony (Sb), a remainder of iron (Fe) and unavoidable impurities, and the sum of Si and Al (Si + Al, wt%) satisfies 1% to 3.5%, at a temperature of 1,000°C to 1,300°C;
hot rolling the heated steel slab at a temperature of 800°C to 950°C to produce a hot rolled steel sheet;
coiling the hot rolled steel sheet at a temperature of 750°C or lower;
cold rolling the coiled hot rolled steel sheet to produce a cold rolled steel sheet;
performing a first annealing operation in which the cold rolled steel sheet is annealed at a temperature of Ac3 or higher and cooled at an average cooling rate of 25°C/sec or lower; and
performing a second annealing operation in which, after the first annealing operation, the first annealed cold rolled steel sheet is heated and maintained at a temperature of Ac1 to Ac3, cooled in an average cooling rate of lower than 20°C/sec to a temperature of 500°C or lower, maintained at the temperature of 500°C or lower 1 second or more, and then cooled.

9. The method according to claim 8, wherein the steel slab further comprises one or more selected from the group consisting of 0.005% to 0.1% of titanium (Ti), 0.005% to 0.1% of niobium (Nb), 0.005% to 0.1% of vanadium (V), 0.005% to 0.1% of zirconium (Zr), and 0.005% to 0.5% of tungsten (W).

10. The method according to claim 9, wherein the steel slab further comprises one or more selected from the group consisting of 1% or less (excluding 0%) of molybdenum (Mo), 1% or less (excluding 0%) of nickel (Ni), 0.5% or less (excluding 0%) of copper (Cu), and 1% or less (excluding 0%) of chromium (Cr).

11. The method according to claim 9, wherein the steel slab further comprises one or more selected from the group consisting of 0.01% or less (excluding 0%) of calcium (Ca), 0.1% or less (excluding 0%) of bismuth (Bi), and 0.01% or less (excluding 0%) of boron (B).

12. The method according to any one of claims 8 to 11, further comprising forming one of a hot-dip galvanized layer, a hot-dip galvannealed layer, an aluminum-silicon plated layer and a zinc-magnesium-aluminum plated layer, on a surface of the cold rolled steel sheet after the second annealing operation.
